Europäisches Patentamt

European Patent Office

Office européen des brevets

(19)

(11) Veröffentlichungsnummer: **0 035 248**
**B1**

(12) **EUROPÄISCHE PATENTSCHRIFT**

(45) Veröffentlichungstag der Patentschrift:
11.07.84

(51) Int. Cl.³: **C 02 F 3/12**, C 02 F 1/52

(21) Anmeldenummer: 81101413.3

(22) Anmeldetag: 26.02.81

(54) Verfahren und Vorrichtung zur biologischen Reinigung von Abwasser.

(30) Priorität: 29.02.80 DE 3007782

(43) Veröffentlichungstag der Anmeldung:
09.09.81 Patentblatt 81/36

(45) Bekanntmachung des Hinweises auf die Patenterteilung:
11.07.84 Patentblatt 84/28

(84) Benannte Vertragsstaaten:
AT BE CH DE FR GB IT LI NL SE

(56) Entgegenhaltungen:
DE - A - 1 642 399
DE - A - 2 321 725
DE - A - 2 548 701
DE - A - 2 640 875
FR - A - 844 812

JOURNAL OF WATER POLLUTION CONTROL
FEDERATION, Band 51, Nr. 4, April 1979, Seiten 783-797
Washington D.C., U.S.A. A. AZKONA et al.: "Phosphorus
removal using waste pickle liquor"

(73) Patentinhaber: Linde Aktiengesellschaft,
Abraham-Lincoln-Strasse 21, D-6200 Wiesbaden (DE)

(72) Erfinder: Reimann, Hans, Dr., Rudolf-Wilke-Weg 21,
D-8000 München 71 (DE)

(74) Vertreter: Schaefer, Gerhard, Dr., Linde
Aktiengesellschaft Zentrale Patentabteilung,
D-8023 Höllriegelskreuth (DE)

## Beschreibung

Die Erfindung betrifft ein Verfahren zur biologischen Reinigung von Abwasser in einer Belebungsanlage mit zwei, getrennte Schlammkreisläufe aufweisenden Stufen, bei dem in der ersten Stufe im wesentlichen die Hauptmenge der organischen Verunreinigungen abgebaut und in der zweiten Stufe der Restabbau durchgeführt wird sowie gegebenenfalls anorganische Stickstoffverbindungen oxidiert werden und bei dem in der ersten Stufe zum Ausfällen von Phosphor enthaltenden Verbindungen Fällungsmittel zugegeben werden.

Bei einem solchen Verfahren wird Abwasser zunächst in der ersten Stufe mit belebtem Schlamm unter gleichzeitiger Zuführung von Sauerstoff vermischt. Durch die Tätigkeit der in dem belebten Schlamm enthaltenen aeroben Mikroorganismen werden die organischen Schmutzstoffe des Abwassers zum Teil in Bakteriensubstanz umgewandelt und zum Teil mittels Sauerstoff zu $CO_2$ und Wasser umgesetzt, so dass in der ersten Stufe weitgehend die Kohlenstoffverbindungen abgebaut werden. In der zweiten Stufe erfolgt dann nach dem Überleiten des Abwasser-Belebtschlamm-Gemisches aus der ersten Stufe der Restabbau sowie gegebenenfalls bei genügender Sauerstoffzufuhr, ausreichender Wassertemperatur und niedriger Schlammbelastung eine Nitrifikation des Abwassers, bei der durch die im Schlamm vorhandenen autotrophen Bakterien Ammonium-Stickstoff zu Nitrit und Nitrat oxidiert wird. Zur Sauerstoffversorgung der Bakterien ist es bekannt, die Belebungsbecken beider Stufen mit Luft oder einem mehr Volumenprozent Sauerstoff als Luft enthaltenden Gas zu begasen.

Zur zusätzlichen Phosphatausfällung bei einem solchen zweistufigen Abwasserreinigungsverfahren ist es bekannt, Fällungsmittel einzusetzen. Dabei können dreiwertige Eisensalze und Aluminiumsulfat in den Ablauf des Belebungsbeckens der zweiten Stufe zugegeben (siehe Journal WPCF, Vol. 47, Nr. 1, January 1975, Seiten 170 bis 184, Removal of soluble phosphorous in an activated sludge plant) werden. Durch die damit verbundene Schlammproduktion wird jedoch das Schlammalter im Belebungsbecken der zweiten Stufe verkürzt, so dass der Ablauf der Nitrifikation in dieser Stufe behindert wird. Ausserdem besteht die Gefahr, dass durch die unvermeidbare Vergrösserung der Menge an chemischen Feststoffen das Auflockern und Klären verschlechtert wird und dadurch das abfliessende Wasser Schwebstoffe enthält.

Darüber hinaus ist es bei einem solchen zweistufigen Abwasserreinigungsverfahren auch bekannt, zum Ausfällen von im Wasser vorhandemem Phosphor Eisen-III-Chlorid oder Aluminiumsulfat unter Mischen in die Begasungszone der ersten Stufe, vorzugsweise am Ende der Begasungszone oder auch zwischen der Begasungszone der ersten Stufe und dem Zwischenklärbecken einzuleiten (DE-A 2 321 725). Mit der Zugabe der Fällungsmittel im Belebungsbecken der ersten Stufe ergeben sich zwar die vorstehend beschriebenen Nachteile nicht, doch liegt das Problem bei Verwendung von dreiwertigen Eisensalzen und Aluminiumsulfat als Fällungsmittel allgemein darin, dass diese relativ teuer sind, so dass deren Einsatz die Wirtschaftlichkeit einer biologischen Abwasserreinigung durch Zugabe von solchen Fällungsmitteln erheblich beeinträchtigen. Dazu kommt, dass beide Fällungsmittel in bezug auf ihre Fällungswirkung einen nur sehr schmalen wirksamen pH-Bereich aufweisen, der bei Eisen-III-Chlorid zwischen 5 und 6 und bei Aluminiumsulfat zwischen 6 und 7 liegt, und dass bei einem pH-Wert des zu behandelnden Abwassers ausserhalb der für die Fällungswirkung optimalen pH-Werte wesentlich mehr Fällungsmittel zugegeben werden muss.

Neben der Verwendung der vorstehend genannten Fällungsmittel ist darüber hinaus auch der Einsatz von zweiwertigen Eisensalzen und Calciumhydroxid bekannt. Allerdings werden diese Fällungsmittel bisher nur in einstufigen biologischen Abwasserreinigungsanlagen eingesetzt [Wasser, Luft und Betrieb 18 (1974), Nr. 5/5, Seiten 289 bis 292, Kläranlage Eutin.]. Dabei zeigt sich, dass im allgemeinen die Absetzgeschwindigkeit der entstehenden Niederschläge sehr gering ist und die besten Werte hinsichtlich einer Phosphatelimination bei langen Aufenthaltszeiten des zweiwertigen Eisensalzes in der Kläranlage erzielt werden, so dass dessen Zudosierung unmittelbar in den Zulauf der Kläranlage empfohlen wird, um eine gute Oxidation des zwei- zum dreiwertigen Eisen sicher verwirklichen zu können.

Aus der DE-A 1 642 399 ist es des weiteren auch bekannt, einer biologischen Abwasserreinigungsanlage mit Belebungsbecken und Nachklärbecken ein Fällungsbecken vorzuschalten, in dem durch chemische Fällungsmittel, wie insbesondere Kalk, bei pH-Werten um 9 suspendierte organische und gelöste Phosphatverbindungen in absetzbare, wasserunlösliche Verbindungen umgewandelt, sedimentiert und ausgeschieden werden. Diese rein chemische Vorfällung, die nicht mit einem zweistufigen biologischen Abwasserreinigungsverfahren mit Fällungsmittelzugabe, bei dem auch die im Schlamm enthaltenen Mikroorganismen Phosphat aufnehmen, vergleichbar ist, zeigt insofern die übliche Anwendung von Kalk als Fällungsmittel, als mit Kalk eine ausreichende Fällungswirkung erst oberhalb eines pH-Wertes von 9 erreicht wird und solche pH-Werte sich in der Regel aufgrund ihrer leicht toxischen Wirkung in Belebungsbecken nicht einstellen lassen.

Schliesslich ist aus der DE-A 2 548 701 ein Verfahren zur biologischen Reinigung einer mit den biologischen Abbauvorgang hemmenden und/oder mit auf Mikroorganismen giftig wirkenden Schadstoffen angereicherten Flüssigkeit bekannt, bei dem diese Flüssigkeit einer ersten Behandlungsstufe zusammen mit im Überschuss anfallendem Belebtschlamm aus einer zweiten Behandlungsstufe, in der eine mit auf biologischem Wege abbaubaren Verunreinigungen belastete Flüssigkeit gereinigt werden soll, zugeleitet wird. Dabei können der ersten Stufe den Reinigungsvorgang unterstützende Chemikalien, z.B. Fällungsmittel, wie Eisen- oder Aluminiumsulfat, zugesetzt werden. Das Wesentliche dieses Verfahrens liegt dabei darin, dass in beiden Behandlungsstufen Flüssigkeiten unterschiedlicher Herkunft behandelt werden und dass der aus der zweiten Behandlungsstufe in die erste Behandlungsstufe übergeleitete

Schlamm zur Adsorption von giftig wirkenden Schadstoffen, die in der in die erste Behandlungsstufe eingeleiteten Füssigkeit vorhanden sind, herangezogen wird. Falls Fällungsmittel in die erste Behandlungsstufe zugegeben werden, handelt es sich um eine reine Simultanfällung, bei der in der Regel dreiwertige Eisensalze oder Aluminiumsulfat aufgrund ihrer direkten Fällungswirkung und aufgrund ihres dem pH-Wert im Belebungsbecken weitgehend entsprechenden pH-Wertoptimum für die beste Fällungswirkung verwendet werden.

Aufgabe der Erfindung ist es, ein zweistufiges Abwasserreinigungsverfahren der eingangs genannten Art so auszugestalten, dass auf einfache und wirtschaftliche Weise eine weitgehende Entfernung von Phosphaten erreicht, zugleich die Reinigungsleistung in bezug auf organische Verunreinigungen gewahrt und gegebenenfalls ein hoher Nitrifikationsgrad ermöglicht wird.

Diese Aufgabe wird erfindungsgemäss dadurch gelöst, dass als Fällungsmittel zweiwertige Eisensalze und/oder Calciumhydroxid verwendet werden und dass die Zugabe der Fällungsmittel zumindest teilweise im Belebungsbecken der ersten Stufe vorzugsweise am Ende des Belebungsbeckens und bei mehrkaskadigen Belebungsbecken in der letzten Kaskadenstufe und/oder zumindest teilweise zwischen dem Belebungsbecken der ersten Stufe und dem Zwischenklärbecken durchgeführt wird.

Der Erfindung liegt die Erkenntnis zugrunde, dass zweiwertiges Eisensalz und/oder Calciumhydroxid auch bei zweistufigen biologischen Abwasserreinigungsanlagen vorteilhaft eingesetzt werden kann. Dabei wird durch die Einleitung dieser Fällungsmittel in die erste Stufe zunächst erreicht, dass die zusätzlich zu den biologischen Feststoffen entstehenden chemischen Feststoffe bereits im Klärbecken der ersten Stufe weitgehend von dem aus der ersten in die zweite Stufe überlaufenden Wasser abgetrennt werden. Die in der zweiten Stufe gegebenenfalls stattfindende Nitrifikation wird dadurch nicht mehr durch ein geringes Schlammalter, wie es sich beim Einleiten der Fällungsmittel in die zweite Stufe aufgrund der dann erhöhten Schlammproduktion in dieser Stufe ergeben würde, behindert. Gleichzeitig wird durch das im erhöhten Mass auftretende Abtreiben von Schwebstoffen aus dem Klärbecken der ersten Stufe aufgrund der vermehrten Schlammproduktion der Schlammindex in der zweiten Stufe verbessert und damit die Wirkung der Nachklärung der zweiten Stufe erhöht. Ein klärer und weitgehend von Phosphaten und Stickstoffverbindungen gereinigter Ablauf aus der Belebungsanlage ist damit sicher zu erreichen.

Dabei wird die Wirtschaftlichkeit des Verfahrens dadurch erhöht, dass zweiwertige Eisensalze und Calciumhydroxid nur einen Bruchteil von dreiwertigen Eisensalzen oder Aluminiumsalzen kosten. Bei zweiwertigen Eisensalzen ist der Kostenvorteil dadurch bedingt, dass in der chemischen Industrie und der Metallverarbeitung grosse Mengen an Eisen(II)-haltigen Abfallsäuren anfallen.

Mit der Zugabe der Fällungsmittel zumindest teilweise im Belebungsbecken der ersten Stufe vorzugsweise am Ende des Belebungsbeckens und bei mehrkaskadigen Belebungsbecken in der letzten Kaskadenstufe wird vermieden, dass die Flockenstruktur des sich bildenden Eisenphosphats nicht durch eine lange Verweilzeit in den in der Mischungszone von zulaufendem Abwasser, Rücklaufschlamm und Sauerstoff auftretenden hohen Turbulenzen geschädigt wird, was zu einer Dispersion der ausgeflockten Teilchen führen und damit eine schlechte Klärung bewirken würde. Die im letzten Teil des Belebungsbeckens oder in der letzten Kaskadenstufe noch vorhandene Turbulenz ist soweit ausreichend, dass eine innige Durchmischung der Fällungsmittel und des Abwasser-Belebtschlamm-Gemisches gewährleistet ist. Ausserdem berücksichtigt diese Zugabestelle der Fällungsmittel, dass am Anfang der biologischen Umsetzung ein gewisser Bedarf der Mikroorganismen für Phosphor vorhanden ist.

Falls insbesondere bei relativ kleinen Belebungsbecken die Turbulenz im letzten Beckenabschnitt für die Ausbildung einer guten Flockenstruktur doch noch zu hoch ist, kann die Zugabe der Fällungsmittel zumindest teilweise aber auch zwischen dem Belebungsbecken der ersten Stufe und dem Zwischenklärbecken erfolgen. Für eine gute Vermischung der Fällungsmittel mit dem Abwasser-Belebtschlamm-Gemisch kann es dabei erforderlich sein, die Fällungsmittel in das zum Klärbecken ablaufende Abwasser-Belebtschlamm-Gemisch unter Turbulenzerzeugung einzuleiten, die für eine gute Absetzung im Klärbecken so abgestimmt werden sollte, dass beim Eintritt des Gemisches in das Klärbecken nur noch eine geringe Turbulenz vorhanden ist.

Ist vorgesehen als Fällungsmittel zweiwertiges Eisensalz und Calciumhydrocid zuzugeben, so hat sich als zweckmässig erwiesen, die Zugabe des Calciumhydroxids an einer Stelle in Fliessrichtung vor der Zugabestelle des zweiwertigen Eisensalzes durchzuführen. Beispielsweise kann das Calciumhydroxid am Ende des Belebungsbeckens und das zweiwertige Eisensalz in den Ablauf des Belebungsbeckens zum Zwischenklärbecken zugegeben werden.

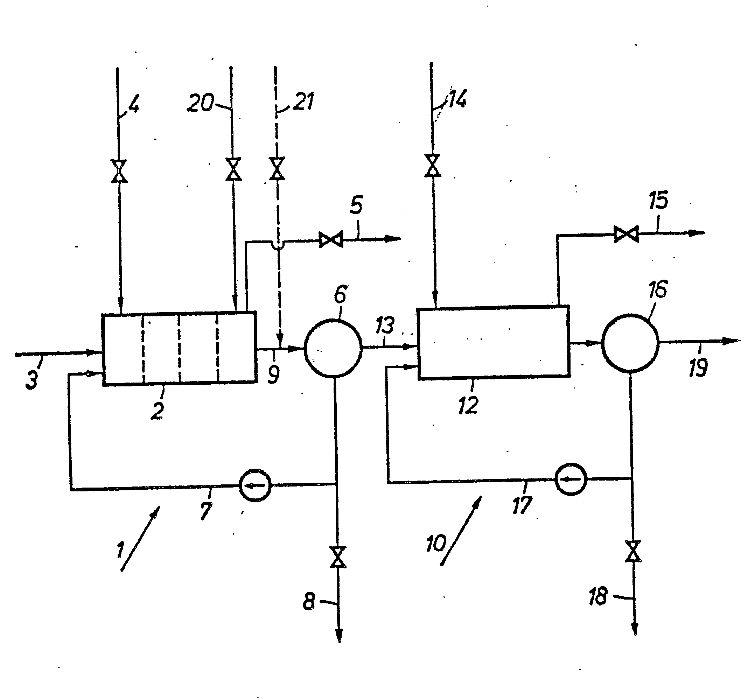

In der Zeichnung ist ein Ausführungsbeispiel einer zur Durchführung des erfindungsgemässen Verfahrens geeigneten zweistufigen Abwasserreinigungsanlage schematisch dargestellt, das nachstehend näher erläutert wird.

In der Figur ist die erste Stufe der Abwasserreinigungsanlage mit 1 und die zweite Stufe mit 10 bezeichnet. Die erste Stufe umfasst ein Belebungsbecken 2 mit einer Abwasserzuleitung 3, einer Gaszuleitung 4 für die Zuleitung von Sauerstoff enthaltendem Gas und eine Abgasleitung 5 sowie ein dem Belebungsbecken 2 nachgeschaltetes Zwischenklärbecken 6 mit einer Schlammrückleitung 7 zur Zuführung von Schlamm in das Belebungsbecken 2 und einer Schlammableitung 8 zur Ableitung von Überschussschlamm.

Die zweite Stufe 10 ist im wesentlichen genau so aufgebaut wie die erste Stufe 1 und umfasst ein Belebungsbecken 12 mit einem an das Zwischenklärbecken 6 der ersten Stufe 1 angeschlossenen Zulauf 13 und ein dem Belebungsbecken 12 nachgeschaltetes Nachklärbecken 16 mit einer Abzugsleitung 19 für gereinigtes Abwasser, einer Schlammrückleitung 17 und einer Schlammableitung 18. Zur Sauerstoffversorgung des Belebungsbeckens 12 ist an dieses ebenso eine Gaszuleitung 14 angeschlossen. Abgas wird über eine Abgasleitung 15 abgezogen.

Der Gaseintrag in das in den beiden Belebungsbecken 2, 12 vorhandene Flüssigkeitsgemisch kann dabei beispielsweise so erfolgen, dass aus der sich unter den Abdeckungen der Belebungsbecken 2, 12 ausbildenden Gasatmosphäre, die sich aus dem über die Gaszuleitungen 4, 14 zugeführten sauerstoffreichen Gas und dem aus dem Flüssigkeitsgemisch aufsteigenden Gas zusammensetzt, über eine nicht dargestellte Leitung Gas abgezogen und zu einem nahe dem Beckenboden angeordneten Gasverteiler geleitet wird. Über den Gasverteilern sind dann Mischvorrichtungen anzuordnen, die für eine gute Durchmischung von Abwasser, Belebtschlamm und Sauerstoff sorgen. Anstelle von geschlossenen Belebungsbecken 2, 12 können aber auch gegenüber der Atmosphäre offen ausgebildete Belebungsbecken verwendet werden, bei denen dann die Gaszufuhrleitungen 4, 14 und Gasableitungen 5, 15 entfallen und zur Sauerstoffversorgung beispielsweise Oberflächenbelüftungskreisel zum Eintrag von Luftsauerstoff in die in dem Belebungsbecken vorhandene Flüssigkeit eingesetzt werden. Auch die Kombination einer Stufe mit einem offenen Belebungsbecken mit einer Stufe mit einem geschlossenen Belebungsbecken ist möglich. Darüber hinaus kann eine Stufe oder beide Stufen zwei hintereinandergeschaltete Belebungsbecken aufweisen.

Erfindungsgemäss ist in jedem Fall an die erste Stufe 1, wie gezeigt, entweder am Ende des Belebungsbeckens 2 eine Zuleitung 20 mit einer Einrichtung zur Regelung des Mengendurchflusses oder an die Verbindungsleitung 9 zwischen Belebungsbecken 2 und Nachklärbecken 6 eine Zuleitung 21 mit einer Einrichtung zur Regelung des Mengendurchflusses angeschlossen, über die als Fällungsmittel zweiwertiges Eisensalz oder Calciumhydroxid der ersten Stufe 1 zugeleitet werden können. Wie durch gestrichelte Linien im Belebungsbecken 2 angedeutet ist, kann dieses in mehrere Beckenabschnitte unterteilt sein, wobei dann die Zuleitung 20 dem in Fliessrichtung letzten Beckenabschnitt zugeordnet ist. Wird Calciumhydroxid und zweiwertiges Eisensulfat als Fällungsmittel verwendet, sollte das Calciumhydroxid über die Zuleitung 20 dem Ende des Belebungsbeckens und das zweiwertige Eisensulfat über die Zuleitung 21 in den Ablauf 9 des Belebungsbeckens 2 eingeleitet werden.

Bei dieser Anordnung der Zuleitungen für die Fällungsmittel werden die zusätzlich zu den biologischen Feststoffen entstehenden chemischen Feststoffe bereits im Klärbecken 6 der ersten Stufe 1 weitgehend von dem aus der ersten Stufe 1 in die zweite Stufe 10 überlaufenden Wasser abgetrennt. Eine Feinabtrennung phosphathaltiger Schwebstoffe erfolgt in der nachfolgenden zweiten Stufe, so dass ein sehr hoher P-Eliminationsgrad erreicht wird.

*Zahlenbeispiel*

Über die Abwasserzuleitung 3 werden der Anlage 100 m³/h Abwasser mit einem P-Gehalt von 10 g/m³ zugeführt. Im Belebungsbecken 2 wird dieses Abwasser mit Belebtschlamm und Sauerstoff kontaktiert bei einer Verweilzeit bezogen auf den Abwasserzufluss von einer Stunde. Über die Leitung 20 wird eine wässrige Lösung von $FeSO_4 \cdot 7H_2O$ zugeführt in einer Menge von 10 kg/h bezogen auf $FeSO_4 \cdot 7H_2O$.

Der Gehalt an Gesamt-Phosphor beträgt im Ablauf 13 des Zwischenklärbeckens 6 noch etwa 2 g/m³ und im Ablauf 19 des Nachklärbeckens 16 noch etwa 1 g/m³.

Bei der kombinierten Kalk-Eisenfällung wird unter sonst gleichen Bedingungen am Ende des Belebungsbeckens 2 über Zuleitung 20 eine Kalkmilchaufschlämmung in einer Menge von 10 kg/h bezogen auf $Ca(OH)_2$ zugegeben und über die mit dem Ablauf 9 des Belebungsbeckens 2 in Verbindung stehende Zuleitung 21 eine Lösung von $FeSO_4 \cdot 7H_2O$ in einer Menge von 4 kg/h bezogen auf $FeSO_4 \cdot 7H_2O$. Auf diese Weise werden gegenüber dem vorhergehenden Beispiel gleiche oder bessere Ablaufwerte erhalten, wobei jedoch an den teureren Eisensulfaten gespart werden kann.

**Patentansprüche**

1. Verfahren zur biologischen Reinigung von Abwasser in einer Belebungsanlage mit zwei, getrennte Schlammkreisläufe aufweisenden Stufen, bei dem in der ersten Stufe im wesentlichen die Hauptmenge der organischen Verunreinigungen abgebaut und in der zweiten Stufe der Restabbau durchgeführt wird sowie gegebenenfalls anorganische Stickstoffverbindungen oxidiert werden, und bei dem in der ersten Stufe zum Ausfällen von Phosphor enthaltenden Verbindungen Fällungsmittel zugegeben werden, dadurch gekennzeichnet, dass als Fällungsmittel zweiwertige Eisensalze und/oder Calciumhydroxid verwendet werden und dass die Zugabe der Fällungsmittel zumindest teilweise im Belebungsbecken der ersten Stufe vorzugsweise am Ende des Belebungsbeckens und bei mehrkaskadigen Belebungsbecken in der letzten Kaskadenstufe und/oder zumindest teilweise zwischen dem Belebungsbecken der ersten Stufe und dem Zwischenklärbecken durchgeführt wird.

2. Verfahren nach Anspruch 1, dadurch gekennzeichnet, dass bei Zugabe von zweiwertigen Eisensalzen und Calciumhydroxid die Zugabe des Calciumhydroxids an einer Stelle in Fliessrichtung vor der Zugabestelle des zweiwertigen Eisensalzes durchgeführt wird.

**Claims**

1. A process for biologically purifying sewage in an activating system comprising two stages having separate sludge cycles, wherein, in the first stage, essentially the main amount of the organic impurities is decomposed and, in the second stage, the decomposition of the remainder is carried out and, if necessary, inorganic nitrogen compounds are oxidized, and wherein, in the first stage, precipitating agents are added to precipitate phosphorous-containing compounds; characterised in that bivalent ferrous salts and/or calcium hydroxide are used as precipitating agents; and that the addition of the precipitating agents is at least partially carried out in the activating tank of the first stage, preferably at the end of the activating tank end, in the case of multicascade activating tanks, in the last cascade stage thereof, and/or at least partially between the activating tank of the first stage and the intermediate settling tank.

2. A process according to claim 1, characterised in that, when adding bivalent ferrous salts and calcium hydroxide, the addition of the calcium hydroxide is effected at a point in the direction of flow upstream of the point of addition of the bivalent ferrous salt.

**Revendications**

1. Procédé pour l'épuration biologique d'eaux usées dans une installation d'activation comportant deux étages pourvus de circuits de boue séparés, suivant lequel dans le premier étage sensiblement la quantité principale des impuretés organiques est dégradée tandis que la dégradation résiduelle est effectuée dans le second étage et, le cas échéant, des composés d'azote inorganiques sont oxydés, et dans lequel des agents de précipitation sont introduits dans le premier étage pour faire précipiter des composés contenant du phosphore, caractérisé en ce que l'on utilise, comme agent de précipitation, des sels de fer bivalents et/ou de l'hydroxyde de calcium et en ce que l'addition des agents de précipitation est effectuée au moins en partie dans le bassin d'activation du premier étage, de préférence, à l'extrémité de ce bac, et dans le cas de plusieurs bacs de traitement en cascade, dans le dernier étage de cascades et/ou au moins en partie entre le bassin d'activation du premier étage et le bassin de clarification intermédiaire.

2. Procédé selon la revendication 1, caractérisé en ce que, lors de l'addition de sels de fer bivalents et d'hydroxyde de calcium, l'addition de l'hydroxyde de calcium est effectuée en un endroit qui est placé, dans la direction d'écoulement, en amont de la zone d'introduction du sel de fer bivalent.